# EUROPEAN PATENT APPLICATION

(11) **EP 2 827 585 A1**
(43) Date of publication of application: **21.01.2015**
(21) Application number: 13760227.2
(22) Date of filing: 04.03.2013
(51) Int. Cl.: H04N 7/173

(54) **INFORMATION PROCESSING METHOD, INFORMATION PROCESSING DEVICE, AND INFORMATION PROCESSING SYSTEM**

(30) Priority: 16.03.2012 JP 2012059995
(71) Applicant: Sony Corporation, Tokyo 108-0075 (JP)
(72) Inventor: SEKI Hiroki, Tokyo 108-0075 (JP)
(74) Representative: Witte, Weller & Partner Patentanwälte mbB
(86) International application number: PCT/JP2013/055885
(87) International publication number: WO 2013/137048

(57) **Abstract**

Provided is an information processing method performed by an information processing device that includes an information acquisition unit configured to acquire, from a server connected via a network, information prepared for each service provided via a network, the information being setting information representing a setting relevant to a function of an application used in utilization of the service, and an application control unit configured to control activation of the application in accordance with the setting represented by the acquired setting information, the information processing method including acquiring, from the server connected via the network, information prepared for each service provided via the network, the information being setting information representing a setting relevant to a function of an application used in utilization of the service, and controlling activation of the application in accordance with the setting represented by the acquired setting information.

## Description

### Technical Field

The present technology relates to an information processing method, an information processing device, and an information processing system, and particularly to an information processing method, an information processing device, and an information processing system capable of providing an environment suitable for a service.

### Background Art

In conventional digital television receivers, the functions specific to a digital television receiver, such as display of an icon as user interface, and display of items of an option menu, as well as the functions specific to a browser such as an action corresponding to manipulation by a remote controller, reading of secure sockets layer (SSL) certificate on the browser, and setting of the background color of the browser, are decided by software of the digital television receiver. To change these functions, the software needs to be updated by a user, for example.

To achieve this, a technology that changes the user interface displayed on the digital television receiver by means of information from an external device, without updating the software, is proposed (for example, refer to Patent Literatures 1 and 2).

### Citation List

### Patent Literature

Patent Literature 1: JP 2010-237771A
Patent Literature 2: JP 2008-67356A

### Summary of Invention

### Technical Problem

By the way, in recent years, when a network service (hereinafter, simply referred to as a service) such as moving pictures, music, online stores, and news, are provided by utilizing a browser of a television receiver, it is required to provide an environment suitable for the service, i.e., to change the functions of the television receiver and the browser for each service.

However, in the technology of Patent Literatures 1 and 2 the functions of the television receiver and the browser are unchangeable for each service.

In addition, although it is possible to change the functions of the television receiver and the browser by updating the software, the software for each service needs to be prepared, and thus the degree of freedom in changing the functions is not high.

The present technology is made in view of such situation, and aims at providing an environment suitable for a service more easily.

### Solution to Problem

According to the first aspect of the present technology, there is provided an information processing method performed by an information processing device that includes an information acquisition unit configured to acquire, from a server connected via a network, information prepared for each service provided via a network, the information being setting information representing a setting relevant to a function of an application used in utilization of the service, and an application control unit configured to control activation of the application in accordance with the setting represented by the acquired setting information, the information processing method including acquiring, from the server connected via the network, information prepared for each service provided via the network, the information being setting information representing a setting relevant to a function of an application used in utilization of the service, and controlling activation of the application in accordance with the setting represented by the acquired setting information.

The setting information may include information representing a setting relevant to a function of a browser, and the information processing device may control activation of the browser in accordance with the setting represented by the acquired setting information.

The setting information may include information representing a setting relevant to a user interface of the information processing device, and the information processing device may control the user interface of the information processing device in accordance with the setting represented by the acquired setting information.

The information processing device may control activation of the browser in accordance with the setting represented by the setting information, if the acquired setting information is correct setting information.

According to another aspect of the present technology, there is provided an information processing device including an information acquisition unit configured to acquire, from a server connected via a network, information prepared for each service provided via a network, the information being setting information representing a setting relevant to a function of an application used in utilization of the service, and an application control unit configured to control activation of the application in accordance with the setting represented by the acquired setting information.

According to another aspect of the present technology, there is provided an information processing system including an information processing device and a server, the information processing device and the server being connected with each other via a network. The information processing device includes an information acquisition unit configured to acquire, from the server, information prepared for each service provided via a network, the information being setting information representing a setting relevant to a function of an application used in utilization of the service, and an application control unit configured to control activation of the application in accordance with the setting represented by the acquired setting information.

In one aspect of the present technology, information prepared for each service which is provided via a network is acquired from a server connected via a network. The information is setting information representing a setting relevant to a function of an application used in utilization of the service. The activation of the application is controlled in accordance with the setting represented by the acquired setting information.

### Advantageous Effects of Invention

According to one aspect of the present technology, a service suitable for the environment is provided more easily.

### Brief Description of Drawings

[FIG. 1] FIG. 1 is a block diagram illustrating an exemplary configuration of one embodiment of an information processing system to which the present technology is applied.
[FIG. 2] FIG. 2 is a block diagram illustrating an exemplary configuration of a server.
[FIG. 3] FIG. 3 is a block diagram illustrating an exemplary configuration of a digital television receiver.
[FIG. 4] FIG. 4 is a block diagram illustrating an exemplary functional configuration of a digital television receiver.
[FIG. 5] FIG. 5 is a flowchart describing a browser activation process.
[FIG. 6] FIG. 6 is a diagram illustrating an exemplary display of a service list.
[FIG. 7] FIG. 7 is a diagram illustrating an example of a configuration file.
[FIG. 8] FIG. 8 is a diagram illustrating an example of a browser set by a configuration file.
[FIG. 9] FIG. 9 is a diagram illustrating an example of a browser set by a configuration file.
[FIG. 10] FIG. 10 is a diagram illustrating an example of a browser set by a configuration file.

### Description of Embodiments

Hereinafter, the embodiments of the present technology will be described with reference to the drawings.

### [Exemplary Configuration of Information Processing System]

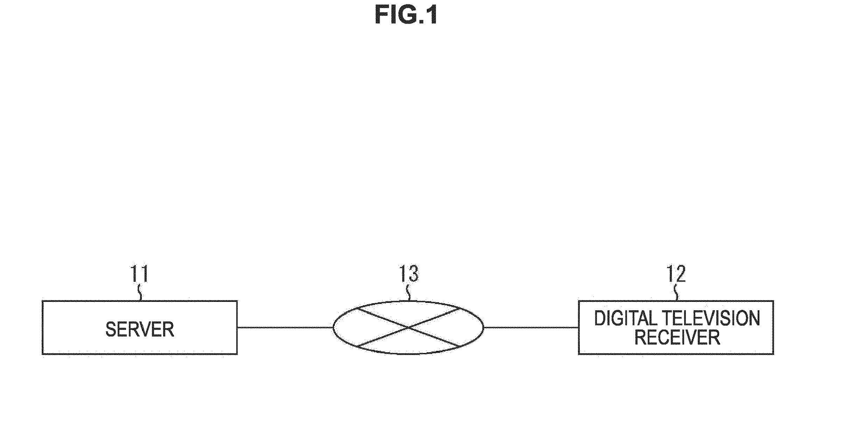

FIG. 1 is a block diagram illustrating an exemplary configuration of one embodiment of an information processing system to which the present technology is applied.

In the information processing system of FIG. 1, a server 11 and a digital television receiver 12 are connected via a network 13 such as the Internet or the like.

A server 11 stores information relevant to services such as moving pictures, music, online stores, and news provided to the digital television receiver 12 by various service providers. The server 11 is managed, for example, by a manufacturer of the digital television receiver 12, an organization controlling the service providers, or the like.

The digital television receiver 12 receives digital television broadcast waves transmitted from a television broadcast station to provide a user with television programs, as well as provides the user with services provided by the service providers via the network 13. During this, the digital television receiver 12 acquires information corresponding to the provided services from the server 11, and provides the user with the services in accordance with a setting based on the information.

### [Exemplary Configuration of Server]

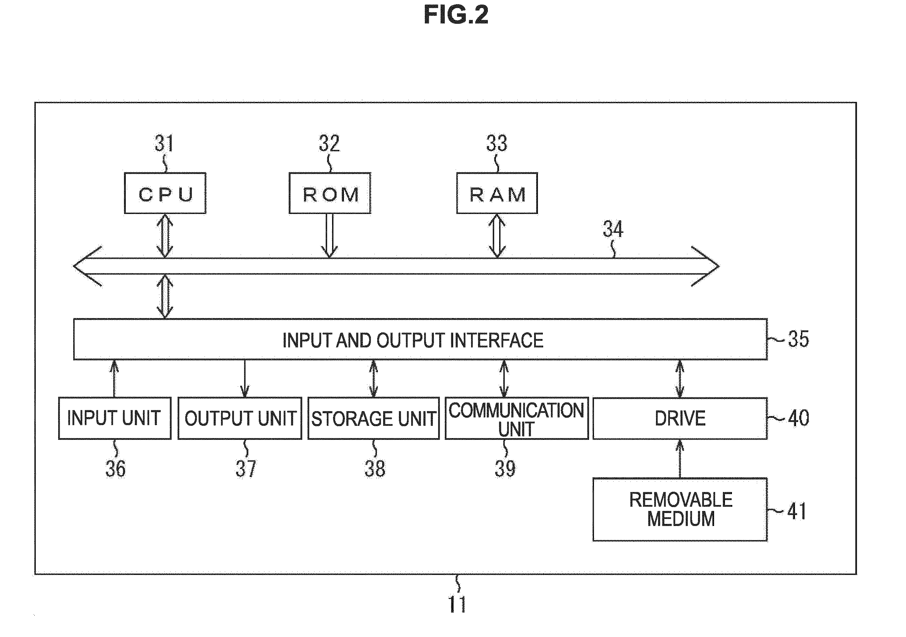

FIG. 2 illustrates an exemplary configuration of the server 11. The server 11 is configured, for example, by a personal computer, and the configuration can be a configuration like a personal computer.

The server 11 is configured to include a central processing unit (CPU) 31, a read only memory (ROM) 32, a random access memory (RAM) 33, a bus 34, an input and output interface 35, an input unit 36, an output unit 37, a storage unit 38, a communication unit 39, and a drive 40.

In the server 11, the CPU 31, the ROM 32, and the RAM 33 are mutually connected by the bus 34. Further, the bus 34 is connected to the input and output interface 35. The input and output interface 35 is connected to the input unit 36 composed of a keyboard, a mouse, a microphone, and the like; the output unit 37 composed of a display, a speaker, and the like; a storage unit 38 composed of a hard disk, a non-volatile memory, and the like; the communication unit 39 composed of a network interface and the like; and the drive 40 for driving a removable medium 41 such as a magnetic disk, an optical disc, a magneto-optical disk, and a semiconductor memory.

The storage unit 38 stores information relevant to the services provided by the service providers, and the information is supplied to the digital television receiver 12 via the communication unit 39 and the network 13.

### [Exemplary Configuration of Digital Television Receiver]

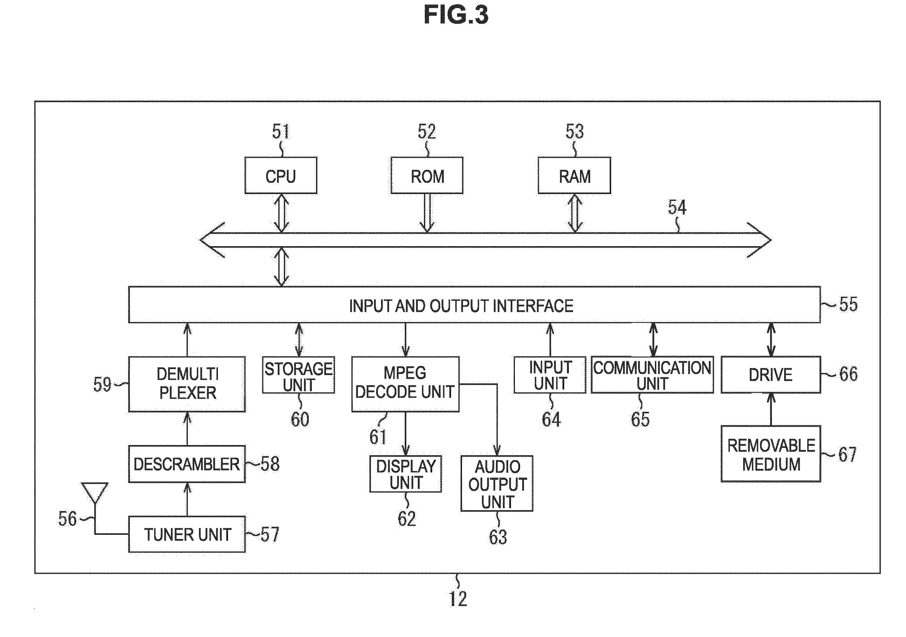

FIG. 3 illustrates an exemplary configuration of the digital television receiver 12.

A CPU 51 executes various processes in accordance with programs recorded in a ROM 52, or programs loaded from a storage unit 60 into a RAM 53. The RAM 53 also stores necessary data for the CPU 51 in executing various processes and the like as appropriate.

The CPU 51, the ROM 52, and the RAM 53 are mutually connected via a bus 54. This bus 54 is also connected to an input and output interface 55.

The input and output interface 55 is connected to a demultiplexer 59, a moving picture experts group (MPEG) decode unit 61, and the storage unit 60 composed of a hard disk and the like.

A tuner unit 57 receives the digital television broadcast waves transmitted via an antenna 56 from the channel (television broadcast station corresponding to the channel) selected by the user from among a plurality of channels, and supplies the digital television broadcast waves to a descrambler 58.

The descrambler 58 descrambles a transport stream supplied from the tuner unit 57 if necessary, and supplies the transport stream to the demultiplexer 59.

The demultiplexer 59 separates video packets and audio packets of a desired program from the transport stream supplied from the descrambler 58, and supplies the video packets and the audio packets to the MPEG decode unit 61 via the input and output interface 55.

The MPEG decode unit 61 decodes the supplied packets by MPEG method, and converts the packets to analog signals (a video signal and an audio signal). The MPEG decode unit 61 supplies the generated video signal to a display unit 62, and supplies the audio signal to an audio output unit 63.

The display unit 62 displays the supplied video signal as a video image, and the audio output unit 63 outputs the audio signal corresponding to the video image (audio signal supplied by the MPEG decode unit 61) as sound.

The input and output interface 55 is also provided with an input unit 64 for inputting a command from the user, and a communication unit 65 for executing a communication process via the network 13 including the Internet.

The input and output interface 55 is also connected to a drive 66 if necessary, and is equipped with the removable medium 67 which is a magnetic disk, an optical disc, a magneto-optical disk, a semiconductor memory or the like, as appropriate. The computer programs read from those are installed in the storage unit 60 if necessary.

Also, the computer programs can be received by the communication unit 65 via a wired or wireless transmission medium, in order to be installed in the storage unit 60. In addition, the computer programs can be pre-installed in the ROM 52 or the storage unit 60.

Note that the computer programs executed by the digital television receiver 12 may be processes executed sequentially in the order described in the present specification, or may be programs in which processes are executed parallelly or at a necessary timing such as a timing when called.

### [Exemplary Functional Configuration of Digital Television Receiver]

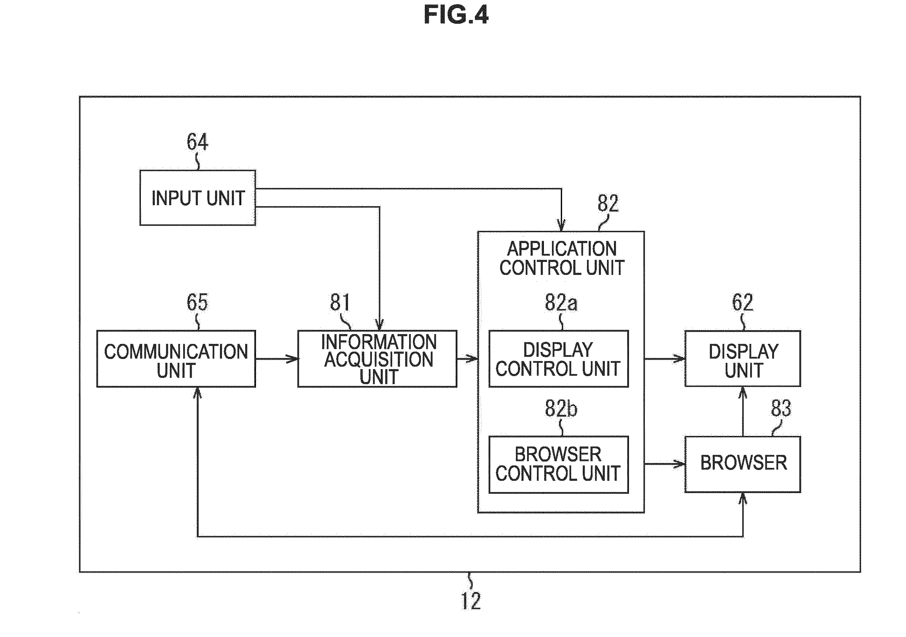

FIG. 4 illustrates an exemplary functional configuration of sections relating to the present technology in the digital television receiver 12.

The digital television receiver 12 of FIG. 4 is composed of a display unit 62, an input unit 64, a communication unit 65, an information acquisition unit 81, an application control unit 82, and a browser 83.

Note that, in the digital television receiver 12 of FIG. 4, elements that have a similar function to the elements provided in the digital television receiver 12 of FIG. 3 are given the same names and the same reference signs, and descriptions are omitted as appropriate.

The information acquisition unit 81 acquires various types of information from the server 11 via the communication unit 65 in response to the manipulation signal corresponding to the manipulation input (command) of the user from the input unit 64, and supplies the information to the application control unit 82.

The application control unit 82 controls the activation of various types of applications of the digital television receiver 12 on the basis of information from the information acquisition unit 81 and the manipulation signal from the input unit 64. Also, the application control unit 82 includes a display control unit 82a and a browser control unit 82b.

The display control unit 82a controls display of the display unit 62 on the basis of the information from the information acquisition unit 81.

The browser control unit 82b controls the activation of the browser 83 on the basis of the information from the information acquisition unit 81 and the manipulation signal from the input unit 64.

The browser 83 is what is called a web browser, which is one of various types of the applications of the digital television receiver 12. The browser 83 is activated by the control of the browser control unit 82b, acquires various types of content provided by the service providers as services via the network 13 and the communication unit 65, and causes the display unit 62 to display the content. Also, the browser 83 calls other applications by the control of the browser control unit 82b based on the manipulation signal from the input unit 64.

### [Browser Activation Process of Digital Television Receiver]

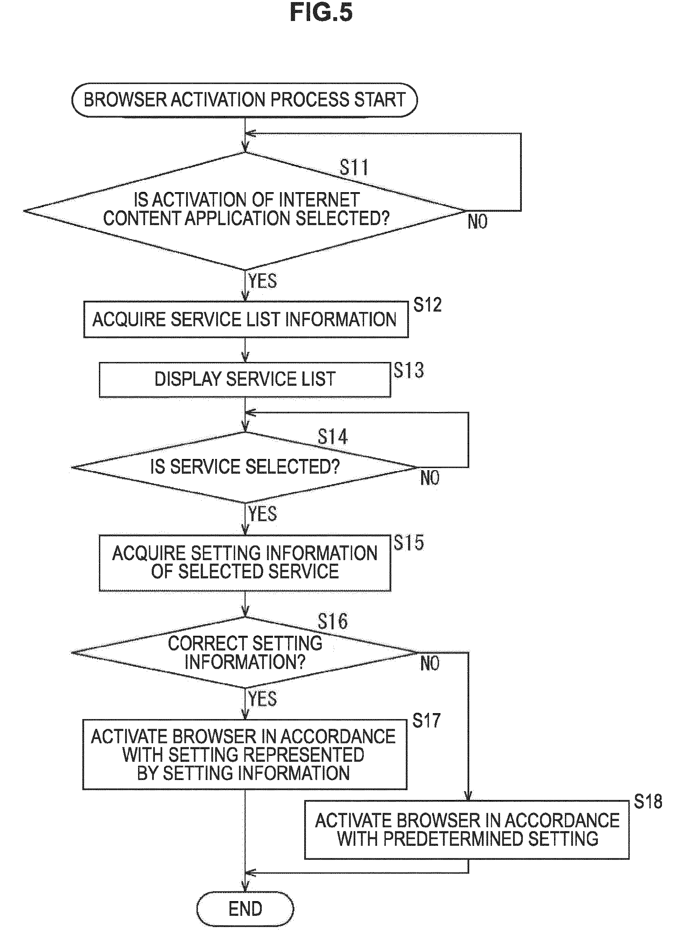

Next, with reference to a flowchart of FIG. 5, description will be made of the browser activation process by the digital television receiver 12.

In step S11, the input unit 64 determines whether or not the activation of the Internet content application, i.e., the web browser is selected, on the basis of the manipulation signal in response to the user's manipulation of the remote controller.

The process of step S11 is repeated until the activation of the Internet content application is selected. If it is determined that the activation of the Internet content application is selected, the input unit 64 supplies the information to that effect to the information acquisition unit 81, and the process proceeds to step S12.

In step S12, the information acquisition unit 81 acquires service list information from the server 11 via the communication unit 65 and the network 13 on the basis of the information from the input unit 64, and supplies the service list information to the display control unit 82a.

The service list information is information for causing the display unit 62 to display a service list which is a list of the services providable to the digital television receiver 12. The service list information is prepared for countries, regions, languages and the like, for example. In other words, the services specific to countries, regions, languages and the like are provided to the digital television receiver 12.

In step S 13, the display control unit 82a causes the display unit 62 to display the service list on the basis of the service list information from the information acquisition unit 81.

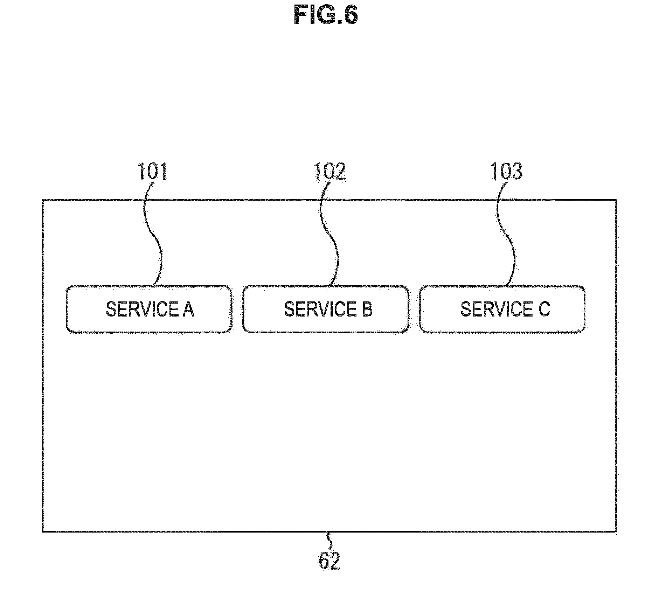

FIG. 6 illustrates an example of the service list displayed on the display unit 62.

As illustrated in FIG. 6, the icon 101 of the service A, the icon 102 of the service B, and the icon 103 of the service C, which are providable to the digital television receiver 12, are displayed on the display unit 62 as the service list.

In step S14, the input unit 64 determines whether or not any of the services providable to the digital television receiver 12, i.e., any of the icons 101 to 103 in the service list of FIG. 6 is selected, on the basis of the manipulation signal in response to the user's manipulation of the remote controller.

The process of step S14 is repeated until any of the services is selected. If it is determined that any of the services is selected, the input unit 64 supplies information to that effect to the information acquisition unit 81, and the process proceeds to step S 15.

In step S15, the information acquisition unit 81 acquires the setting information of the selected service from the server 11 via the communication unit 65 and the network 13 on the basis of the information from the input unit 64, and supplies the setting information to the display control unit 82a and the browser control unit 82b. Also, at this time, the information acquisition unit 81 requests the activation of the browser 83 to the browser control unit 82b.

The setting information is information prepared for each service, and is information representing the setting relevant to the function of the application used in utilizing the service. Specifically, the setting information includes information representing the setting relevant to the function of the browser 83 and the user interface of the digital television receiver 12.

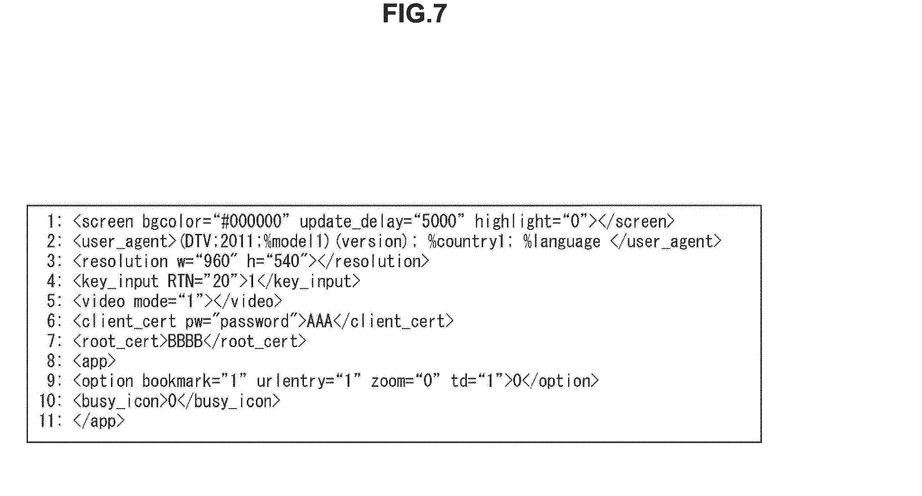

Here, with reference to FIG. 7, description will be made of an example of a configuration file stored in the server 11 as the setting information.

This configuration file is described in accordance with a versatile description method, and, for example, is described in the extensible markup language (XML) format.

At lines 1 to 7 in the configuration file illustrated in FIG. 7, the setting relevant to the function of the browser is described.

The <screen> tag at line 1 represents the setting relevant to the display of the browser. In the <screen> tag, the element bgcolor represents the background color of the browser, and "#000000" representing black is set in the example of FIG. 7. The element update_delay represents the waiting time from updating the display of the browser to displaying the content which is to be displayed next, and "5000" representing 5000 msec is set in the example of FIG. 7. The element highlight represents presence or absence of the highlighted display at the focus given to an item on the browser, and "0" representing the absence of the highlighted display at the focus is set in the example of FIG. 7.

The <user_agent> tag at line 2 represents the setting of the User-Agent header included in a hyper text transfer protocol (HTTP) request which the browser transmits to the provision source of a service when displaying the web page. In the <user_agent> tag, %model1 represents the model name of the digital television receiver 12, and %version represents the version of the software installed in the digital television receiver 12. Also, %country1 represents a country, and %language represents the language that is used when the browser displays the web page.

The <resolution> tag at line 3 represents the setting of the resolution of the browser. In the general digital television receiver, the resolution of Full HD model is 1920 x 1080, but the suitable resolution sometimes differs depending on the service. Specifically, for example, the web page of a certain service has a resolution of 1280 x 720, and the moving picture content of a certain service has a resolution of 960 x 540. Accordingly, the resolution suitable for the service is set to the <resolution> tag. In the example of FIG. 7, w="960" h="540" is set which represents the resolution of 960 x 540.

The <key_input> tag at line 4 represents the setting of the key code assigned to the key of the remote controller with which the user performs manipulation input to the browser. In the past, the browser activated on the digital television receiver allows only the manipulation inputs by the up-down-left-right key and the confirmation key of the remote controller. In the case where the moving picture content is provided as a service, if the browser transmits the key codes for instructing play, rewind, and fast forward to the provision source of a service when the manipulation input is performed using the play key, the rewind key, and the fast forward key of the remote controller, the user can watch the moving picture content without a feeling of strangeness. In the <key_input> tag, the element RTN represents the key code transmitted to the provision source of a service when the return key of the remote controller is manipulated, and "20" is set to represent the key code of number 20 in the example of FIG. 7. Also, "1" described between the start tag and the end tag represents that the key codes set in the <key_input> tag are all effective.

The <video> tag at line 5 represents the setting of the image quality of the image displayed on the browser. For example, a large brightness is suitable when moving picture content is watched on the browser, and the brightness for the moving picture content is not needed when text content is browsed on the browser. Accordingly, an image quality suitable for the service is set on the <video> tag. In the example of FIG. 7, mode="1" representing an image quality suitable for moving pictures, is set.

The <client_cert> tag at line 6 represents the setting relevant to the certificate for conducting the client authentication. In the <client_cert> tag, the element pw represents a password necessary for the client authentication, and "password" is set in the example of FIG. 7. Also, the <root_cert> tag at line 7 represents a setting relevant to the certificate for conducting the server authentication of the provision source of a service.

Also, in the configuration file illustrated in FIG. 7, the setting relevant to the function of the digital television receiver 12, particularly a user interface, is described at line 9 and line 10 sandwiched by the start tag <app> at line 8 and the end tag </app> at line 11.

The <option> tag at line 9 represents the setting relevant to the items displayed on the option menu of the digital television receiver 12 and the functions of the items. In the <option> tag, the element bookmark represents presence or absence of display of the item of the bookmark on the option menu, and in the example of FIG. 7, "1" representing the presence of display of the item of the bookmark is set. The element urlentry represents availability or unavailability of input of a URL to a URL (uniform resource locater) input unit (address bar) of the option menu, and in the example of FIG. 7, "1" representing availability of input of a URL is set. The element zoom represents presence or absence of display of the item of the zoom display of the option menu, and in the example of FIG. 7, "0" representing absence of display of the item of the zoom display is set. The element td represents presence or absence of display of the item of the 3D menu in the option menu, and in the example of FIG. 7, "1" representing the presence of display of the item of the 3D menu is set. Also, "1" described between the start tag and the end tag represents that the content set in the <option> tag is all effective.

The <busy_icon> tag at line 10 represents presence or absence of display of a busy icon representing that the browser is reading the web page (in communication). In the example of FIG. 7, "1" described between the start tag and the end tag represents the presence of display of the busy icon.

Note that the above configuration file may include only information representing the setting relevant to the functions of the browser, and may include only information representing the setting relevant to the user interface of the digital television receiver.

Now, back to the flowchart of FIG. 5, in step S16, the browser control unit 82b determines whether or not the setting information from the information acquisition unit 81 is correct setting information. Specifically, the browser control unit 82b checks rightfulness of the information, i.e., whether the configuration file from the information acquisition unit 81 is described in accordance with the XML format, whether the activation request of the browser 83 from the information acquisition unit 81 is rightful, and the like.

If it is determined that the setting information is correct in step S16, the process proceeds to step S 17, and the browser control unit 82b activates the browser 83 in accordance with the setting (setting relevant to the functions of the browser) represented by the setting information (configuration file) from the information acquisition unit 81. Simultaneously, the display control unit 82a controls display of the display unit 62 in accordance with the setting (setting relevant to the user interface of the digital television receiver 12) represented by the setting information (configuration file) from the information acquisition unit 81.

On the other hand, if it is determined that the setting information is not correct in step S16, the process proceeds to step S18, and the browser control unit 82b discards the setting information (configuration file) from the information acquisition unit 81, and activates the browser 83 in accordance with the predetermined (default) setting. Simultaneously, the display control unit 82a discards the setting information (configuration file) from the information acquisition unit 81, and controls the display of the display unit 62 in accordance with the predetermined (default) setting.

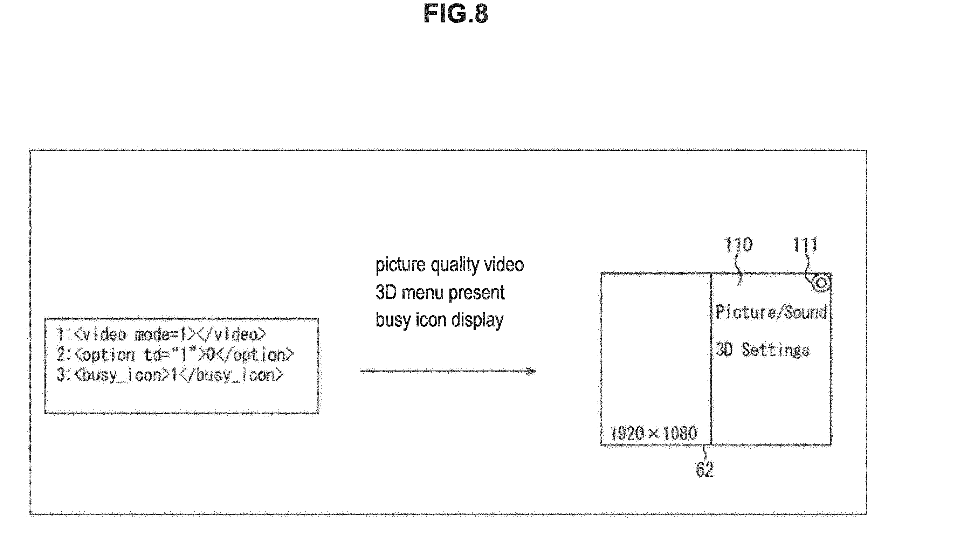

FIG. 8 illustrates an example of the browser set by the configuration file, when the icon 101 is selected, in other words a service A is selected, in the service list of FIG. 6.

When the service A is selected as illustrated in the left side of FIG. 8, the configuration file is acquired from the server 11. The configuration file sets the image quality of the image displayed on the browser to the image quality suitable for the moving pictures, the display of the item of the 3D menu in the option menu to be present, and the display of the busy icon to be present.

As a result, in the display unit 62, as illustrated in the right side of FIG. 8, the item of the 3D menu are displayed in the option menu 110, and the busy icon 111 is displayed too, and the browser that provides the content of the image quality suitable for the moving pictures is displayed.

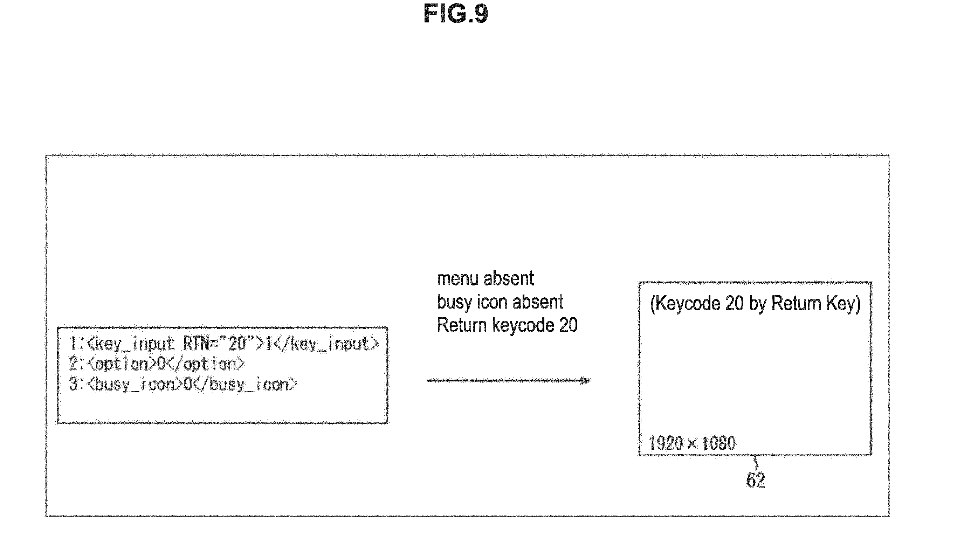

FIG. 9 illustrates an example of the browser set by the configuration file, when the icon 102 is selected, in other words a service B is selected, in the service list of FIG. 6.

When the service B is selected, as illustrated in the left side of FIG. 9, the configuration file is acquired from the server 11. The configuration file sets the key code transmitted to the provision source of a service when the return key of the remote controller is manipulated to number 20, the display of the item in the option menu to be absent, and the display of the busy icon to be absent.

As a result, in the display unit 62 as illustrated in the right side of FIG. 9, any item is not displayed in the option menu 110, and the busy icon 111 is not displayed either, and the browser that transmits the key code of number 20 to the provision source of a service when the return key is manipulated is displayed.

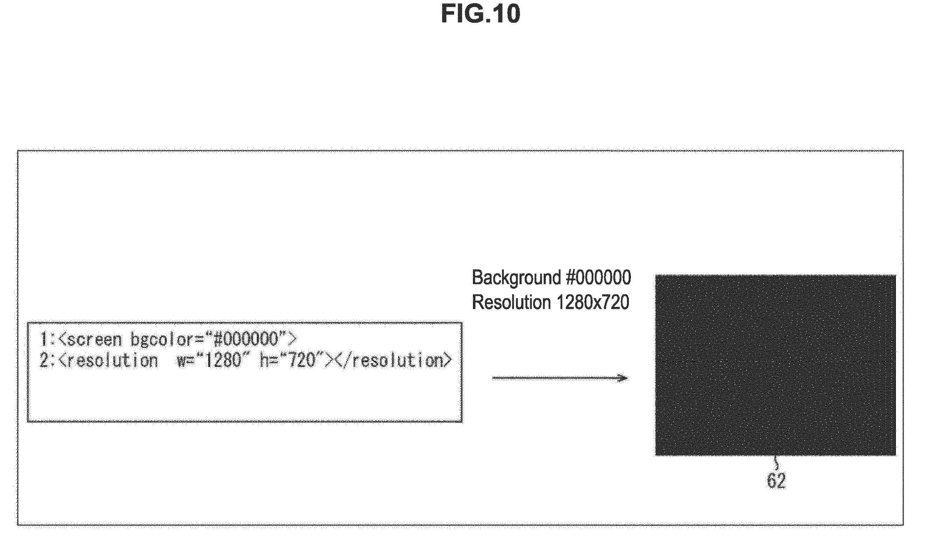

FIG. 10 illustrates an example of the browser set by the configuration file, when the icon 103 is selected, in other words the service C is selected, in the service list of FIG. 6.

When the service C is selected as illustrated in the left side of FIG. 10, the configuration file is acquired from the server 11. The configuration file sets the background color of the browser in black, and the resolution of the browser at 1280 x 720.

As a result, as illustrated in the right side of FIG. 10, the browser, of which the background color is black and the resolution is 1280 x 720, is displayed on the display unit 62.

According to the above process, since the setting information of the selected service is acquired, and the application used in utilization of the service is activated in accordance with the setting represented by the acquired setting information, the environment suitable for the service is provided. Specifically, since the setting information includes, for example, information representing the setting relevant to the function of the browser and the user interface of the digital television receiver, the service is provided by the browser and the user interface customized for each service.

Also, even when a providable service is added or the setting of the browser at the time of providing existing services is changed after the digital television receiver is distributed in the market, it is sufficient to change the setting information on the server side, and it is unnecessary to provide and update software for each service, enabling the environment suitable for the service to be provided more easily.

For example, although the setting information of each service includes the setting relevant to the certificate, it is unnecessary to update the software even when the period of validity of the certificate is expired, and the certificate is updated only by changing the setting information of the server side.

Note that, since the setting information (configuration file) is described by the versatile description method, the setting information may be extended to set not only the function of the browser and the user interface of the digital television receiver which are described above, but also other function of the browser and functions of various applications executed on the digital television receiver.

For example, another application that is not activated from the browser may be activated depending on a service. Also, the reproducible file format of content may be switched for each service, in such a manner that, for example, only the content of mp4 format is allowed to be reproduced for a certain service. Further, a setting of the image quality other than the setting of the image quality described above may be conducted for each service.

Also, for each service, the character size displayed on the browser may be changed, and the storage utilization may be limited.

Further, depending on the service, two screen display may be allowed, and the television broadcasting may be displayed in a partial region, for example a lower right region, of the display unit during the activation of the browser.

Note that the embodiment of the present technology is not limited to the above embodiment, but various alterations are possible within the scope not departing from the spirit of the present technology. For example, the present technology is not limited to the digital television receiver, but may be applied to the electronic devices that can provide network services, such as a BD player for playing a blu-ray (R) disc (BD), a cellular phone such as a smartphone, a tablet terminal, a gaming machine such as the Play Station (registered trademark of Sony Computer Entertainment Inc.), and a personal computer.

Also, the present technology may take a configuration of the cloud computing in which one function is shared by a plurality of devices via a network and is processed in cooperation.

Also, each step described in the above flowchart may be executed by one device, and may be shared and executed by a plurality of devices.

Further, where one step includes a plurality of processes, the plurality of processes included in the one step may be executed by one device, and may be shared and executed by a plurality of devices.

Additionally, the present technology may also be configured as below.
(1) An information processing method performed by an information processing device that includes
   an information acquisition unit configured to acquire, from a server connected via a network, information prepared for each service provided via a network, the information being setting information representing a setting relevant to a function of an application used in utilization of the service, and
   an application control unit configured to control activation of the application in accordance with the setting represented by the acquired setting information,
   the information processing method including:
   acquiring, from the server connected via the network, information prepared for each service provided via the network, the information being setting information representing a setting relevant to a function of an application used in utilization of the service; and
   controlling activation of the application in accordance with the setting represented by the acquired setting information.
(2) The information processing method according to (1), wherein
   the setting information includes information representing a setting relevant to a function of a browser, and
   the information processing device controls activation of the browser in accordance with the setting represented by the acquired setting information.
(3) The information processing method according to (1) or (2), wherein
   the setting information includes information representing a setting relevant to a user interface of the information processing device, and
   the information processing device controls the user interface of the information processing device in accordance with the setting represented by the acquired setting information.
(4) The information processing method according to any one of (1) to (3), wherein
   the information processing device controls activation of the application in accordance with the setting represented by the setting information, if the acquired setting information is correct setting information.
(5) An information processing device including:
   an information acquisition unit configured to acquire, from a server connected via a network, information prepared for each service provided via a network, the information being setting information representing a setting relevant to a function of an application used in utilization of the service; and
   an application control unit configured to control activation of the application in accordance with the setting represented by the acquired setting information.
(6) An information processing system including an information processing device and a server, the information processing device and the server being connected with each other via a network, wherein
   the information processing device includes
   an information acquisition unit configured to acquire, from the server, information prepared for each service provided via a network, the information being setting information representing a setting relevant to a function of an application used in utilization of the service, and
   an application control unit configured to control activation of the application in accordance with the setting represented by the acquired setting information.

### Reference Signs List

- 11: server
- 12: digital television receiver
- 13: network
- 62: display unit
- 64: input unit
- 65: communication unit
- 81: information acquisition unit
- 82: application control unit
- 82a: display control unit
- 82b: browser control unit
- 83: browser

## Claims

1. An information processing method performed by an information processing device that includes
an information acquisition unit configured to acquire, from a server connected via a network, information prepared for each service provided via a network, the information being setting information representing a setting relevant to a function of an application used in utilization of the service, and
an application control unit configured to control activation of the application in accordance with the setting represented by the acquired setting information,
the information processing method comprising:
acquiring, from the server connected via the network, information prepared for each service provided via the network, the information being setting information representing a setting relevant to a function of an application used in utilization of the service; and
controlling activation of the application in accordance with the setting represented by the acquired setting information.

2. The information processing method according to claim 1, wherein
the setting information includes information representing a setting relevant to a function of a browser, and
the information processing device controls activation of the browser in accordance with the setting represented by the acquired setting information.

3. The information processing method according to claim 1, wherein
the setting information includes information representing a setting relevant to a user interface of the information processing device, and
the information processing device controls the user interface of the information processing device in accordance with the setting represented by the acquired setting information.

4. The information processing method according to claim 1, wherein
the information processing device controls activation of the application in accordance with the setting represented by the setting information, if the acquired setting information is correct setting information.

5. An information processing device comprising:
an information acquisition unit configured to acquire, from a server connected via a network, information prepared for each service provided via a network, the information being setting information representing a setting relevant to a function of an application used in utilization of the service; and
an application control unit configured to control activation of the application in accordance with the setting represented by the acquired setting information.

6. An information processing system comprising an information processing device and a server, the information processing device and the server being connected with each other via a network, wherein
the information processing device includes
an information acquisition unit configured to acquire, from the server, information prepared for each service provided via a network, the information being setting information representing a setting relevant to a function of an application used in utilization of the service, and
an application control unit configured to control activation of the application in accordance with the setting represented by the acquired setting information.
